# EUROPEAN PATENT SPECIFICATION

(11) **EP 1 627 490 B1**
(45) Date of publication and mention of the grant of the patent: **26.12.2007**
(21) Application number: 04727904.7
(22) Date of filing: 16.04.2004
(51) Int. Cl.: H04L 9/12

(54) **PROCESSOR AND METHOD FOR END-TO-END ENCRYPTION SYNCHRONISATION**
PROZESSOR UND VERFAHREN FÜR END-TO-END-VERSCHLÜSSELUNGSSYNCHRONISATION
PROCESSEUR ET PROCEDE DE SYNCHRONISATION DE CHIFFREMENT DE BOUT-EN-BOUT

(30) Priority: 19.05.2003 GB 0311571
(43) Date of publication of application: 22.02.2006
(73) Proprietor: MOTOROLA INC., Schaumburg, IL 60196 (US)
(72) Inventor: Chater-Lea, David, Basingstoke, Hampshire RG22 4PD (GB)
(74) Representative: McCormack, Derek James
(86) International application number: PCT/EP2004/050551
(87) International publication number: WO 2004/102872

(56) References cited:
- EP-A- 1 209 844
- GB-A- 2 379 843
- "Terrestrial Trunked Radio (TETRA); Security; Synchronization mechanism for end-to-end encryption; ETSI ES 202 109" ETSI STANDARDS, EUROPEAN TELECOMMUNICATIONS STANDARDS INSTITUTE, SOPHIA-ANTIPO, FR, vol. TETRA-6, no. V111, January 2003 (2003-01), XP014004554 ISSN: 0000-0001

## Description

### FIELD OF THE INVENTION

The present invention relates to a processor, method, transmitter and terminal for use in communications, particularly for sending encrypted information from a first location to a second location, e.g. by wireless.

### BACKGROUND OF THE INVENTION

Many communication systems employ a procedure to encrypt sensitive communicated information especially where the information is sent via insecure channels, e.g. by wireless over the air or via the internet.

For example, in TETRA mobile communication systems, which operate in accordance with TETRA (TErrestrial Trunked Radio) standards or operating protocols which have been defined by the European Telecommunications Standards Institute (ETSI), calls can be end-to-end encrypted. This means that the encryption can only be applied by the sender (source) of the information and removed by the recipient (destination) of the information. This is achieved by producing a random or pseudorandom sequence of numbers (binary digits) and using an encryption algorithm to combine the sequence with a secret user key applied by the user. The combination generates another sequence incorporating the user key which is known as a keystream. The keystream, or a portion of it, is then used to encrypt the user speech, data or other information to be transmitted in encrypted form. This is done by using a process such as by use of an XOR (exclusive OR) function to combine the unencrypted information, such as digital speech information, with the keystream.

In the TETRA operating protocol, transmissions to and from mobile terminals are controlled in a synchronized time slot mode. The slot duration for a traffic (voice, data etc) channel is 14.167ms. Four slots represent four physical channels in a TDMA (time division multiple access) protocol and form one time frame of duration 56.67ms in an 18 time frame multiframe timing structure. TETRA terminals generate speech information in speech frames using an ACELP, One speech frame is transmitted in half of a traffic time slot (known as a 'half slot' or 'sub-slot') at the air interface and therefore two speech frames are transmitted in one timeslot.

The TETRA standard and the transmission protocol is detailed in the EN300392 series of documents published by ETSI. Application and synchronisation of encryption processes is detailed in ETSI document ES202109.

The encryption process has to be synchronised between the transmitter in the sending terminal and the receiver in the receiving terminal. The transmitter must send information concerning the state of the encryption algorithm to the receiver to allow the receiver to synchronise its algorithm for decryption. This synchronisation process is described in the ETSI document ES202109. A synchronisation frame or message is sent in a half slot in place of a frame of encrypted speech information. This is known in the art as 'frame 'stealing'.

This synchronisation process can be processor intensive to achieve, as it can require a cryptographic checksum to be generated for the synchronisation frame. If the same algorithm is used to generate the cryptographic checksum as is used for the speech encryption process, it can require a change of algorithm mode and/or a change of input parameters. Even if the algorithm is different, it can still be required to operate on the same processor as the encryption process. Either switching modes and reinitialising or changing algorithms can be processor intensive.

The encryption processor may be forced to generate synchronisation information every time it produces an output used to encrypt speech frames, as the decision process whether to transmit the synchronisation or not may rest with a process outside the encryption device, for example to mitigate any negative effects on speech quality.

The encryption process standardised in ES202109 and by other documents, encrypts every speech frame independently. Therefore synchronisation is available for each half slot separately. This process is referred to herein as 'single frame encryption'. The process allows the transmitter to replace either the first half slot of encrypted speech with a synchronisation message, or the first and second half slots together; and in the latter case, the synchronisation is different in the first and second half slot. The synchronisation information sent in the first half slot of a timeslot provides the state of the algorithm exactly at the start of the second half slot. The synchronisation information sent in a second half slot provides the state of the encryption algorithm at exactly the start of the first half slot of the following timeslot.

However, recent proposals have been made to conduct at least some of the encryption process using smaller, lower power devices, such as smartcards. The overhead of generating a keystream to encrypt each half slot independently, and generating a synchronisation message every half slot can be too great for such devices, especially where a cryptographic checksum is used. In consequence, it has been proposed that these devices use a modified process in which they encrypt over a full timeslot, that is encrypt two frames of speech information together, and only generate one synchronisation message for each timeslot. This alternative process is referred to herein as 'double frame encryption'. For double frame encryption, the synchronisation information provides the state of the algorithm at exactly the start of the following full timeslot, whether the synchronisation message is transmitted in the first or the second half slot of a timeslot.

It can be seen that the single frame encryption and double frame encryption processes are therefore incompatible with regard to handling of second half slot synchronisation. Further incompatability arises as a result of the way in which the encryption algorithm operates in the two processes as illustrated further later.

EP-A-1,209,844 describes a method and arrangement for maintaining end-to-end encryption in a telecommunications system. Each frame of data is encrypted with a separate encryption key stream block generated using an initialisation vector which varies from one block to the next. Each initialisation vector is in turn predictable from the previous one. Thus, so long as a receiving terminal knows the initialisation vector at a given time it can calculate the corresponding initialisation vector several frames later. A 'reminder' of the initialisation vector at a given time is transmitted periodically in the form of a synchronisation vector, e.g. 1 to 4 times per second, to allow a terminal to join a group call late, and synchronise its decryption with that applied at a transmitting terminal.

### SUMMARY OF THE PRESENT INVENTION

According to the present invention in a first aspect there is provided a processor for encrypting or decrypting information to be communicated from a first location to a second location, the processor being operable to generate consecutive encryption keystream blocks, to divide each keystream block into an encryption portion and a synchronisation portion, to encrypt or decrypt consecutive segments of information using each of the consecutive encryption portions; characterised in that the processor is operable in each of at least two modes, including a first mode in which the processor is operable to produce a single encryption portion from each given keystream block and a second mode in which the processor is operable to produce a plurality of encryption portions and a single synchronisation portion from each given keystream block, whereby when the processor is operating in the second mode it is operable to synchronise with a processor operating in the first mode.

The processor may be operable to employ the synchronisation portion divided from a given keystream block as an initial vector to produce the next keystream block.

In the first mode the processor may be operable to encrypt_or decrypt each frame of information in a half slot or each pair of frames in a time slot of an operational timing sequence using the single encryption portion and in the second mode the processor may be operable to encrypt two or more frames of information in a timeslot of the timing sequence using each of the encryption portions for each of the frames.

The processor may be operable to send and/or receive a signal indicating the mode in which the processor is to operate. The processor may beneficially be operable to receive a signal indicating the mode in which the processor is to operate and to set its method of operation accordingly.

In a preferred form of the first aspect of the invention, there is provided a processor for producing an encryption keystream to encrypt or decrypt information to be communicated from a first location to a second location, the processor comprising a keystream generator operable to generate a keystream; and a divider operable to divide the keystream into equally sized blocks each of which is to be allocated to encryption or decryption or synchronisation or includes a portion to be discarded, and wherein each of the blocks is sub-divided into portions which are to be allocated to encryption or decryption, synchronisation or discarding and wherein each block includes a plurality of encryption or decryption portions and only a single synchronisation portion. The processor may comprise a keystream generator operable to generate a keystream; and a divider operable to divide the keystream into blocks including encryption portions and synchronisation portions; wherein each of the blocks is sub-divided into a plurality of equally sized sub-blocks and comprises a plurality of separate encryption portions each in a respective one of the sub-blocks and a single synchronisation portion in one of the sub-blocks.

The divider may be operable to produce 2"sub-blocks per block, where n is an integer equal to 1 or more.

The divider may be operable to produce per block a first sub-block including an encryption portion followed by a discard portion followed by a second sub-block equal in size to the first sub-block and including an encryption portion followed by a synchronisation portion. The encryption portion is for encryption of information. The discard portion is a portion of the block that is not needed in any further operation and can therefore be discarded.

The second sub-block may include an encryption portion followed by a discard portion followed by a synchronisation portion. The synchronisation portion is for providing a link between keystream blocks and optionally also to synchronise operation of a processor (e.g. in a receiver) operating a corresponding decryption process to decrypt a communication of information encrypted using the encryption portion.

The processor may produce keystream blocks each having a length of 512 bits and sub-blocks each having a length of 256 bits. The encryption portions may each have a length of 137 bits, e.g. as required to encrypt a frame of information in a TETRA procedure. The synchronisation portions may each have a length of 64 bits.

The keystream generator may include a random number generator operable to produce a random number, often referred to in the art as an 'Initial Vector or IV' and a combiner operable to combine the random number with a secret key to generate an initial keystream block. The secret key may be a special number or code available only to a particular user. It may be produced by any of the methods known in the art, e.g. by a key issue authority. The combiner may operate by any of the key combining methods known in the art. It may for example comprise an exclusive OR combiner.

The divider and the keystream generator of the processor may be operably coupled so that the synchronisation portion in each keystream block is combined with a secret key to produce the next keystream block. In this way, the synchronisation portion which is an encrypted random number which is itself a random number acts as a link between blocks of the keystream. One keystream block may be produced in each timeslot of a communications timing sequence in which encrypted information is to be communicated. The synchronisation portion thereby acts a synchronisation between keystream blocks in the various bolcks.

In the processor according to the first aspect, the random number generator may produce an initial vector block and the keystream generator may perform multiple combinations of the initial vector block and the secret key to produce the keystream block. The initial vector block may for example have a length of 64 bits and the keystream generator may for example perform eight cycles of combining the vector block with the secret key to provide a keystream block having a length of 512 bits.

According to the present invention in a second aspect there is provided a an encryption processor including a processor according to the first aspect and a combiner for combining information to be encrypted with the encyption portions produced from the keystream by the divider. The combiner may operate by any of the methods known in the art, e.g. by an exclusive OR function.

The encryption processor may beneficially be operable so that two frames of the information to be encrypted are respectively combined with encryption portions once per time slot of a communications timing sequence in which the information when encrypted is to be communicated. For example two frames may be encrypted in this way every slot of a TETRA TDMA timing sequence; each such frame is encrypted in a sub-slot (half slot) and two encrypted frames may communicated together. Each pair of such encrypted frames may be accompanied in the same time slot be its own synchronisation portion (used also for linking between blocks of the keystream as referred to earlier.

The information to be encrypted may comprise one or more of speech information, text and/or numeric data, picture information and video information.

According to the invention in a third aspect there is provided a communications transmitter including an encryption processor according to the second aspect.

According to the present invention in a fourth aspect theer is provided a telecommunications terminal including the transmitter according to the third aspect.

In one form, the processor according to the first aspect is detachable from the terminal. For example, the processor may be carried on a user smartcard which has to be attached to the terminal in order to make the terminal operable in an encypted communications mode. Communication to and/or from the terminal may be wireless although the invention is also useful in connection with other forms of telecommunication, e.g by a landline or wired network or via the internet. The terminal may thus be be a fixed or mobile wireless communications terminal, e.g. one which operates according to TETRA standard protocols.

Where two terminals are communicating in accordance with the invention, both sending and receiving terminal must be using the same algorithm, which may be loaded into them in some known way (e.g. by installing a processing chip, or loading a software program) before they start communicating. They could each use more than one algorithm, but in this case an algorithm identifier is transmitted, e.g. together with the encryption synchronisation message, and will allow the receiver to identify which algorithm the transmitter is using, and so to decide whether it can receive using it or not.

Similarly both terminals need to have the same key, which has to be provided and agreed before communication. It could be manually entered in the terminal, programmed by some tool, or loaded over the air with a rekeying mechanism (which sends encrypted keys over the air). The key material is also identified by a unique identifier that is transmitted by the transmitter (the key itself is desirably not transmitted) and again the receiver looks for this ID message, loads the associated key and uses it for decryption provided that it has this key and key ID stored.

According to the present invention in a fifth aspect there is provided a method for producing an encryption keystream to encrypt information to be communicated from a first location to a second location, the method comprising generating a keystream; and dividing the keystream into blocks including encryption portions and synchronisation portions; wherein each of the blocks is sub-divided into a plurality of equally sized sub-blocks and comprises a plurality of separate encryption portions each in a respective one of the sub-blocks and a single synchronisation portion in one of the sub-blocks. The method may use the processor according to the first aspect.

According to the present invention in a sixth aspect there is provided a method of encrypting information to be communicated from a first location to a second location, the method including producing a keystream by the method according to the fifth aspect and combining the encryption portions of the keystream with information to be encrypted. The encryption may be carried out using the encryption processor according to the second aspect.

According to the present invention in a seventh aspect, a method of communicating information from a first location to a second location, e.g. from a first fixed or mobile wireless terminal to a second remote fixed or mobile wireless terminal by wireless communication, includes encrypting the information by the method according to the sixth aspect for transmission from the first location, receiving the encrypted information at the second location and decrypting the received information.
This invention is a mode of operation of the encryption algorithm and synchronisation transmission that is compatible between the original single frame, half slot based encryption system, and the more recent two frame full timeslot based encryption system.

The advantages of this system are that the algorithm is operated to encrypt two frames at once, but synchronisation is only derived and made available for transmission once in a transmission. Thus a lower power processor used to generate the encryption output keystream can encrypt two frames in a mode compatible with a separate encryption system, and only have the processing load of generating one synchronisation frame for each timeslot.

### BRIEF DESCRIPTION OF THE ACCOMPANYING DRAWINGS

FIGs 1 to 3 are flow diagrams of known encryption procedures.
FIG 4 is a schematic block circuit diagram of a proceesor embodying the invention.
FIG 5 is a flow diagrams of an encryption procedure embodying the invention.
FIG 6 is a block schematic circuit diagram of a mobile station operable in accordance with an embodiment of the invention.
FIG 7 is a diagram showing two mobile stations communicating in accordance with embodiments of the invention.

### DETAILED DESCRIPTION OF EMBODIMENTS OF THE INVENTION

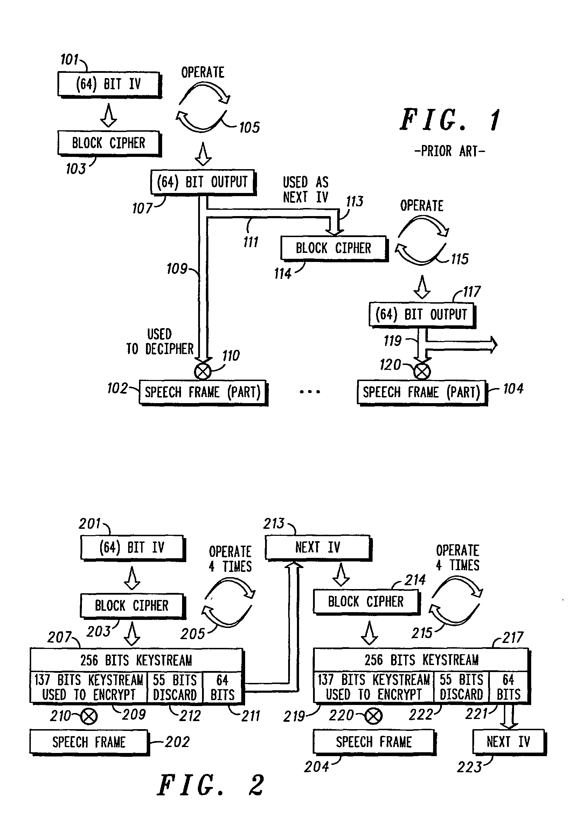

In order that the invention may be better appreciated, the encryption process employed in the known encryption procedures will first be described with reference to FIGs. 1 to 3. Potential incompatibility of the single frame encryption and double frame encryption processes described earlier arises in the generation and application of encryption keystream in the half slots. This is explained as follows.

Algorithms for generating a keystream for encryption are often used in a block cipher based output feedback mode. This is illustrated in FIG. 1 operating on frame parts 102, 104 of a speech frame in a known manner. An IV (random 'initial vector') typically a random binary digital number is generated at step 101 having a length equal to a block length to be processed in a block cipher 103. The block length is typically 64 bits as in the well known commercially available algorithms such as 'International Data Encryption Algorithm' ('IDEA') as supplied by Ascom. Other block lengths can however be used. The IV is encrypted in the block cipher step 103 in a keystream generator using a relevant secret user key as another input. The keystream generation algorithm operates in step 105 to produce at a 64 bit output forming a keystream block indicated by 107. A first portion of the keystream block 107 is employed as an encryption portion 109 in a combining step 110 to encrypt part 102 of the speech frame comprising clear user information. This is carried out by a known XOR combination procedure. A second portion 111 of the keystream block 107 is employed as a synchronisation portion to form the next IV input as shown at 113 to the keystream generator as shown at 113 to form a block cipher 114. Using this input, the keystream generator runs the algorithm again, as shown by step 115, to produce the next keystream block shown at 117, a portion 119 of which is used to encrypt at step 120 the part speech frame 104, and so on.

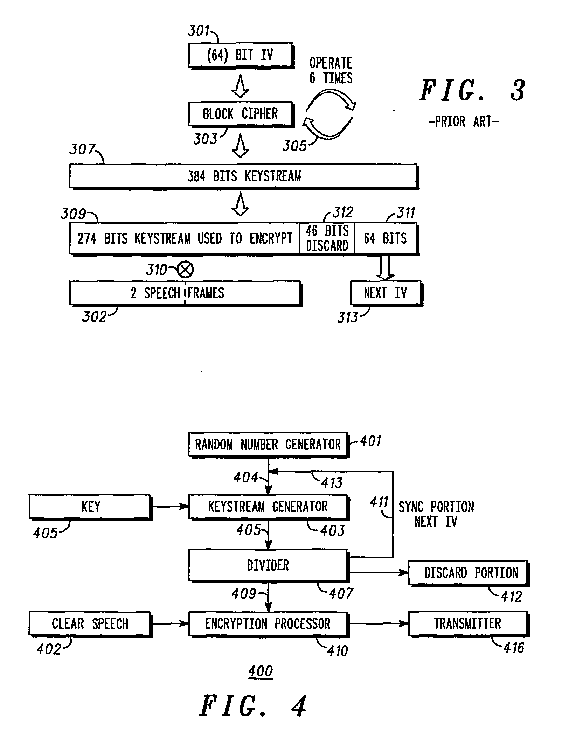

For a practical encryption process using the single frame encryption procedure referred to earlier, the process of operating the algorithm to produce a keystream block is typically repeated for enough cycles to encrypt a single speech frame, and then one further time to provide a sycnronisation portion which can be used as an IV to start the process to encrypt the following speech frame. This IV can also be transmitted as a synchronisation message to a receiver without compromising security, as it is not used to encrypt further information itself, and the next and previous outputs of the algorithm cannot be derived without knowledge of the secret key. For the double frame encryption procedure referred to earlier, the algorithm is typically operated for enough cycles to encrypt two speech frames joined together, and then for one further time to generate an IV that can be used for the next timeslot of two speech frames. These practical procedures are illustrated as follows with reference to FIGs. 2 and 3.

Keystream generation, encryption and synchronisation using the single frame encryption procedure referred to earlier to encrypt separate complete frames 202, 204 of speech information is illustrated in FIG.2. This example employs the frame sizes in the TETRA standard as an example, namely 137 bits of information for a speech frame, and a typical 64 bit block size algorithm as in FIG.1. In FIG.2 an IV (random 'initial vector') is generated at step 201 having a length equal to a block length to be processed in a block cipher 203. The block length is 64 bits. The IV is encrypted in a block cipher 203 in a keystream generator using a relevant secret user key as another input. The keystream generation algorithm operates a number of times. In this case four times, as indicated in step 105, to produce a 256 bits output forming a keystream block indicated by 207. A first portion of the keystream block output 207 of length 137 bits is employed as an encryption portion 209 in a step 210 to encrypt the 137 bit speech frame 202 comprising clear user information. This is again carried out by a known XOR combination procedure. A second portion 211 of length 64 bits of the keystream block output 207 is employed as a synchronisation portion to form the next IV input to the keystream generator, as shown at 213. A third portion 212 having a length of 55 bits (the total length 256 bits less the lengths 137 bits and 64 bits of the portions 209 and 211) is a discard portion which is not further used. Using the synchronisation portion 211 as a further IV input as shown at 213, into the 64 bit block cipher as shown at 214, the keystream generator runs the algorithm again four times, as shown by step 215, to produce the next 256 bit keystream block output shown as 217. A first portion of the keystream block 217 of length 137 bits is employed as an encryption portion 219 in a combining step 220 to encrypt the second 137 bit speech frame 204 comprising clear user information. A second (last) portion 221 of the keystream block output 217 is employed as a synchronisation portion to form the next IV input to the keystream generator, as shown at 223, and an intermediate portion 222 of the output 217 having a length of 51 bits is a discard portion, and so on.

FIG. 3 illustrates operation of the known double frame encryption process referred to earlier. This example again employs the frame sizes in the TETRA standard as an example, namely 137 bits of information for a speech frame, and a typical 64 bit block size algorithm as in FIG.1. This example operates generally in the same manner as the example illustrated in FIG. 2. However, in this case, two speech frames in a single timeslot, total length 274 bits (twice 137 bits), are encrypted together as shown by 302. In FIG.3 an IV (random 'initial vector') is generated at step 301 having a length equal to a block length to be processed in a block cipher 303. The block length is 64 bits. The IV is encrypted in the block cipher 303 in a keystream generator using a relevant secret user key as another input. The keystream generation algorithm operates a number of times, in this case six times, in step 305 to produce a 384 (6 x 64) bit output forming a keystream block indicated by 307. A first portion of the keystream block 307 of length 274 bits (2 x 137 bits) is employed as an encryption portion 309 in a combining step 310 to encrypt the 274 bit dual speech frame 302 comprising clear user information. This is again carried out by a known XOR combination procedure. A second (last) portion 311 of the keystream block output 307 is employed as a synchronisation portion to form the next IV input to the keystream generator, as shown at 313. A third (intermediate) portion 312 having a length of 46 bits (the total length 384 bits less the lengths 274 bits and 64 bits of the portions 209 and 311) is a discard portion 312 which is not further used. The process is repeated to encrypt further dual frames of speech information.

It can be seen that the known single frame and double frame encryption procedures shown in FIGs 2 and 3 are incompatible. Even if the algorithms in each procedure start in the same state with the same IV at the first frame of the timeslot, the second timeslot will be encrypted differently in the two examples; i.e. the algorithm output used as keystream to encrypt the second frame will be from a different point in the total numbers of algorithm operation cycles.

Furthermore, in a typical implementation, the algorithm will 'freewheel' across many timeslots before synchronisation message is resent to the receiver. This reduces the processing overhead of sending the synchronisation message, reduces computational power in encoding and checking the synchronisation, and reduces any speech quality degradation which could be caused if synchronisation message transmission replaces speech transmissions. It can be seen that subsequent timeslots would be incompatible between the two examples (single and double frame encryption) if this freewheeling procedure is used, as the single frame encryption procedure in the TETRA case advanced the algorithm for eight cycles each timeslot, whereas the double frame recent dual frame full timeslot encryption system advances the algorithm for six cycles each timeslot. This incompatibility problem is solved by the invention.

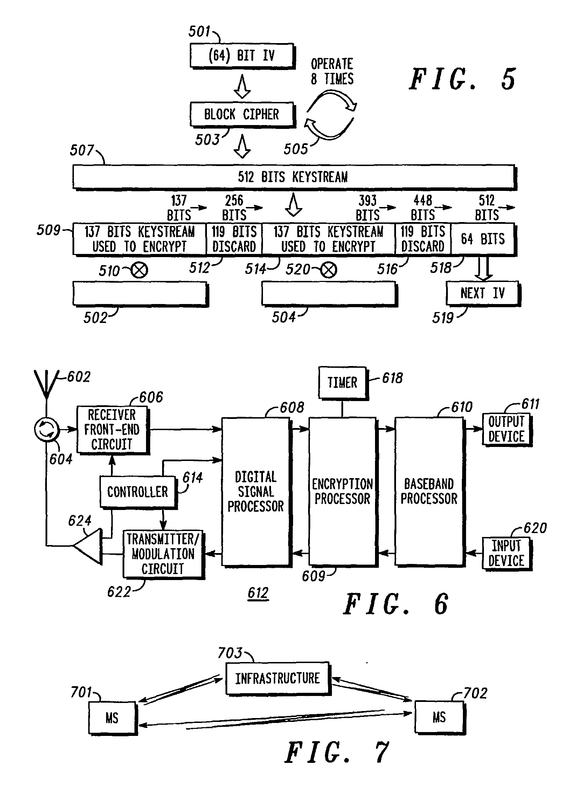

FIG 4 is a block schematic diagram of an encryption prcessor 400 useful in encrypting information in accordance with an embodiment of the invention. A random number generator 401 produces an output consisting of an IV 404 which is applied as initial input to a keystream generator 403. A secret key 405 possessed by a user is applied as an input to the keystream generator 403. An algorithm is run in the generator 403 to combine the key 405 and IV 404 in multiple cycles to produce as an output a keystream block 405 which is operated on by a divider 407 to divide the keystream block output 405 into three portions, namely an encryption portion 409, a synchronisation portion 411 which is applied back into the keystream generator to provide the next IV for the keystream generator 403, and a discard portion 412, which is not further used. Detailed operation of the processor 400 in accordance with an embodiment of the invention is described with reference to FIG. 5 as follows.

The procedure embodying the invention shown in FIG 5 again employs the frame sizes in the TETRA standard as an example, namely 137 bits of information for a speech frame, and a typical 64 bit block size algorithm. This example operates generally in the same manner as the example illustrated in FIG. 3. However, in this case, two speech frames in a single timeslot as shown by 502, 504, each frame of length 137 bits, are encrypted separately. In FIG.5, an IV (random 'initial vector') (produced as indicated earlier by the random number generator 401 of FIG. 4) is generated at step 501 having a length equal to a block length to be processed in a block cipher (as in the keystream generator 403 shown in FIG. 4). The block length is 64 bits. The IV is encrypted in the block cipher 503 using the relevant secret user key (as key 405, FIG.4) as another input. The keystream generation algorithm run in the generator 403 operates a number of times, in this case eight times, in step 505 to produce a 512 (8 x 64) bit output forming a keystream block indicated by 507 (equivalent to output 405 in FIG.4). A first portion (as divided by the divider 407 of FIG. 4) of the keystream block 507 of length 137 bits is employed as an encryption portion 509 in a combining step 510 (in the encryption processor 410 of FIG. 4) to encrypt the 137 bit single speech frame 502 comprising clear user information. This is again carried out by a known XOR combination procedure. A second portion 512 (as divided by the divider 407 of FIG. 4) having a length of 119 bits (the total length of half of the keystream block 507 less the length 137 bits of the portion 509) is a discard portion 512 which is not further used. A third portion (as divided by the divider 407 of FIG. 4) of the keystream block 507 of length 137 bits is employed as a further encryption portion 514 in a further combining step 520 (in the encryption processor 410 of FIG. 4) to encrypt the second 137 bit single speech frame 504 comprising clear user information. This is again carried out by a known XOR combination procedure. A fourth portion 516 (as divided by the divider 407 of FIG. 4) has a length of 55 bits, i.e. the total length (256 bits) of half of the keystream block 507 less the length 137 bits of the portion 514 plus the length, 64 bits, of a fifth portion 518. The fourth portion, between the portions 514 and 518, is a discard portion 512 which is not further used. Finally for the timeslot, the fifth portion 518 at the end of the divided keystream block 507 is employed as a synchronisation portion to form the next IV input to the block cipher (in the keystream generator 403) as shown at 519. The process using this IV input is repeated to encrypt further pairs of frames of speech information in succeeding timeslots.

The benefit of the invention as illustrated by the embodiment shown in FIG. 5 is to provide compatability with both the single frame encryption procedure illustrated in FIG. 2 and the double frame encryption procedure illustrated in FIG.3. The discarding of 119 bits in the discard portion 512 between the two encryption portions 509 and 514 allows the second speech frame 504 to be encrypted with the next output keystream bits of the keystream block 507 produced by the algorithm in the keystream generator 403 after its first four cycles of operation are complete. It can be seen that the algorithm will have been operated at this point for the same number of cycles as in the single frame encryption example illustrated in FIG. 2. Following the encryption of the second frame 504, a further 55 bits are discarded in the discard portion 516, and the last 64 bits are used as the IV used for synchronisation of the following timeslot. This accounts for the second half of the keystream block 507 which also requires four cycles of the algorithm in the keystream generator 403.

AS noted earlier, the advantages of the invention are that the algorithm run in keystream generator 403 is operated to encrypt two frames at once, but a synchronisation portion is derived less frequently. It is only derived and made available for transmission once in a transmission. Thus a lower power processor used to generate the encryption output keystream can encrypt two frames in a mode compatible with a separate encryption system, and need only have the processing load of generating one synchronisation message or frame for each timeslot.

The more general case where more than two speech frames per timeslot are to be encrypted using an algorithm requiring multiple cycles of operation in the keystream generator, and where the procedure is to be compatible with an approach where only one timeslot (this is the single frame encryption procedure referred to earlier) is encrypted by one or more cycles of the algorithm is as follows:

The algorithm is operated for as many cycles as would have been required for the single frame encryption system. Keystream is allocated to encrypt speech such that the allocated keystream is the same as it would have been in a single frame encryption system. Keystream is discarded between the segments used to encrypt the speech frames. The keystream following the final speech frame is used to generate an Initial Vector to be used for synchronisation purposes, that is the same as would have been generate following the encryption of the final frame in a single frame encryption system.

Referring now to FIG. 6, a block diagram of a subscriber unit which is a mobile station (MS) 612 adapted to operate using an embodiment of the present invention is shown. The MS 612 may be suitable for operating in a trunked or direct mode as required. The MS 612 includes an antenna 602 preferably coupled to a duplex filter or circulator 604 that provides isolation between receive and transmit chains within MS 612. The receiver chain includes a receiver front-end circuit 606 (effectively providing reception, filtering and intermediate or base-band frequency conversion). The front-end circuit 606 receives signal communications from another terminal, such as another MS, in its secure talk group. The front-end circuit 606 is serially coupled to a signal processor (generally realised by a digital signal processor, DSP) 608. The signal processor 608 performs signal demodulation, error correction and formatting, and recovers end-to-end encrypted information from the received signal. A signal representing the information recovered by the signal processor 608 is serially coupled to an encryption processor 609, the operation of which is as described earlier with reference to FIGs 4 and 5.

A timer 618 in FIG. 6 may be operably coupled to the encryption processor 609 to provide replay protection, in a known manner by key modification or other means, to the encryption process in addition to the secret key 405 (referred to in FIG.4) entered by the user.

As known in the art, received signals that have been decrypted by the encryption processor 609 are typically input to a baseband processing device 610, which takes the decrypted information received from the encryption processor 609 and formats it in a suitable manner to send to an output device 611, such as a speaker and/or display, e.g. a visual display unit (VDU).

In an alternative form of the MS shown in FIG.6, the functions of the signal processor 608 and the baseband processing device 610 may be provided within the same physical device. The function of the encryption processor 609 may also be provided within the same physical device as either the signal processor 408 or the baseband processing function 610, or both. Alternatively, as mentioned earlier, part of the encryption processor 609 may be part of a separate device, e.g. smartcard, which is applied into a suitable connection in the MS 612 to provide operation.

A controller 614 controls the information flow and operational state of processors within the MS 612.

The MS 612 will not be able to decrypt a received encrypted transmission if the MS 612 does not possess the secret key used by the sender, and possibly also the transmitter ID, e.g. Layer 2 identifier, of the sending MS, or if the transmission has been corrupted to affect the transmitter ID of the sending MS. In the latter case, the transmission would appear to have been sent from a different user, and therefore the transmission could not be decrypted. The MS 612 will also not be able to decrypt the encrypted transmission if it does not possess the correct combining function algorithm.

As regards the transmit chain of the MS 612, this essentially includes an input device 620, such as a microphone, coupled in series through a baseband processor 610, an encryption processing function 609, the signal processing function 608, transmitter/modulation circuitry 622 and a power amplifier 624. The processor 608, transmitter/modulation circuitry 622 and the power amplifier 624 are operationally responsive to the controller 614, with an output from the power amplifier 624 coupled to the duplex filter or circulator 604, as known in the art.

The transmit chain in the MS 612 takes the baseband signal from input device 620 and converts it into information that can be encrypted by the encryption processor 609. The encryption processor 609 encrypts this in the manner described with reference to FIGs 4 and 5 using a secret key and possible also a transmitter ID, e.g. Layer-2 MAC identity, which may be provided by the processor 608, or some other storage capable device within the MS 612. The encrypted information is then passed to the signal processor 608 where it is encoded for transmission by transmit/modulation circuitry 622 and power amplifier 624.

The signal processor 608 in the transmit chain may be implemented as distinct from the processor in the receive chain. Alternatively, a single processor 608 may be used to implement processing of both transmit and receive signals, as shown in FIG. 6.

Of course, the various components within the MS 612 can be realised in discrete or integrated component form, with an ultimate structure therefore being a selection from these forms.

The generic case where more than one speech slot is encrypted by an algorithm requiring multiple cycles of operation, and is to be compatible with an approach where only one slot is encrypted by one or more cycles of the algorithm is as follows:

The algorithm is operated for as many cycles as would have been required for the single frame encryption system. Keystream is allocated to encrypt speech such that the allocated keystream is the same as it would have been in a single frame encryption system. Keystream is discarded between the segments used to encrypt the speech frames. The keystream following the final speech frame is used to generate an Initial Vector to be used for synchronisation purposes, that is the same as would have been generate following the encryption of the final frame in a single frame encryption system.

Speech has been referred to as the information to be decrypted in the invention embodiments descried above. However the same procedures are also applicable to any form of digital data where the data can be encrypted in single or multiple frames.

With the encryption process provided by this invention, any synchronisation message or frame received in the second half slot of a timeslot will always be correct for the first frame (the first half slot) of the following timeslot whether related to the single frame encryption system or the multiple frame encryption system.
However, a synchronisation message sent in the first half of a timeslot will be incompatible between the systems unless an algorithm is applied in the processor of the receiving terminal to correct for the differences. The invention allows an algorithm that is applied in a receiver operating in a single frame procedure as referred to earlier to operate in a double frame mode and vice versa once the other mode is recognised.

The ability of an algorithm to recognise a different operation mode is well known in the art per se, and can be achieved in application of the invention by sending an identifier that relates to the encryption and synchronisation mode as part of the transmitted synchronisation system.

In this invention, each of the two modes applies a different algorithm. This is illustrated as follows with reference to FIG 7. In Fig 7, two mobile stations (terminals) 701, 702 can communicate directly either in a trunked mode via an infrastructure 703 or directly. Assume that the MS 701 is a transmitting terminal and the MS 702 is a receiving terminal and each can operate in either a first mode which is the single frame procedure known per se or in a second mode which is the two frame mode described with reference to FIG 5 (the invention embodiment).

If the MS 701 is operating in the first mode it transmits a synchronisation value that contains an IV describing the algorithm state at exactly the start of the next speech frame, i.e. the next half slot. When the MS 702 is also set to operate in the first mode a single frame encryption system receiving device receives such a value, having identified the source to be another first mode transmitting device. The MS 702 synchronises its algorithm used for decryption with the received IV at the start of the next speech frame, irrespective of whether the IV was received in the first or second half slot of the transmission.

When the MS 702 in first mode receives an IV, having identified the source to be a second mode transmitting device, it synchronises its encryption/decryption processing algorithm used for decryption with the received IV at the start of the next timeslot, irrespective of whether the IV was received in the first or second half slot of the transmission. If the IV was received in the first half slot of a timeslot, the MS 702 must discard any encrypted information contents in the second half slot as it does not know the state of the encryption algorithm at this time. The exception to this is if the receiving device had previously received valid synchronisation, and was able to derive the correct value through its freewheel process.

If the MS 701 is in the second mode, it transmits a synchronisation value that contains an IV describing the algorithm state at exactly the start of the next full timeslot. When the MS 702 receives such a value, having identified the source to be another second mode transmitting device, it synchronises its algorithm used for decryption with the received IV at the start of the next timeslot, irrespective of whether the IV was received in the first or second half slot of the transmission.

When the MS 702 is set to receive in the second mode and receives an IV in the second half slot of a timeslot, having identified the source to be a first mode transmitting device, it synchronises its algorithm used for decryption with the received IV at the start of the next timeslot.

When the MS 702 in the second mode receives an IV in the first half slot of a timeslot, having identified the source to be a single frame encryption system transmitting device, it either discards the IV as being incorrect for the start of the next timeslot, or synchronises its algorithm used for decryption with the received IV, then advances the algorithm state by the number of timeslots that would have been used to encrypt an information frame and generate synchronisation for the first half of the timeslot (without applying the output to any decryption process again), and then uses the IV output from this process as the synchronisation state at the start of the next timeslot. In the TETRA case, this means that when the second mode receiver receives an IV in the first half slot, it must advance the algorithm for four cycles, and then use the resultant IV to synchronise itself for reception at the start of the next timeslot.

Thus the invention provides an encryption processor and process where more than one frame of information (which may be speech or data etc) are encrypted by an algorithm where the synchronisation and operation of the algorithm is compatible with a similar processor and process in which only one frame of information is encrypted and synchronised at a time.

The invention is also distinguished from known systems in that an output keystream produced by an encryption/decryption algorithm with the purpose of encrypting multiple frames of information has segments discarded to make its output compatible with an algorithm encrypting single frames of information only.

In the invention, the encryption/decryption processor and process determine the segments of keystream to be discarded.

The invention also provides a processor and process (algorithm or operational method) for synchronising one encryption process with another by determining at which point in an encrypted stream of information a synchronisation value is valid for, and advancing an encryption algorithm or discarding information to provide compatible synchronisation.

The invention further provides a method of encrypted communication whereby the communicating terminal using each of two possible modes can recognise a transmission from the other mode, and apply such an algorithm to ensure that they become and remain synchronised.

In the invention, the encryption/decryption algorithm can be operated in any suitable mode as either a stream cipher or a block cipher.

## Claims

1. A processor (400) for encrypting or decrypting information to be communicated from a first location (701) to a second location (702), the processor being operable to generate consecutive encryption keystream blocks (207), to divide each keystream block into an encryption portion (209) and a synchronisation portion (211), to encrypt or decrypt one or more frames (202, 302) of information using each of the consecutive encryption portions (209, 219); **characterised in that** the processor is operable in each of at least two modes, including a first mode in which the processor is operable to produce a single encryption portion (209) from each given keystream block (207) and a second mode in which the processor is operable to produce a plurality of encryption portions (509, 514) and a single synchronisation portion (518) from each given keystream block (507), whereby when the processor is operating in the second mode it is operable to synchronise with a processor operating in the first mode.

2. A processor according to claim 1 wherein the processor is operable to employ the synchronisation portion (211) divided from a given keystream block (207) as an initial vector to produce the next keystream block (217).

3. A processor according to claim 1 or claim 2 and wherein in the first mode the processor is operable to encrypt or decrypt each frame of information in a half slot or each pair of frames in a time slot of an operational timing sequence using the single encryption portion and in the second mode the processor is operable to encrypt two or more frames of information in a timeslot of the timing sequence using each of the encryption portions for each of the frames.

4. A processor according to claim 1, claim 2 or claim 3 and wherein the processor is operable to send and/or receive a signal indicating the mode in which the processor is operating.

5. A processor according to claim 4 and wherein the processor is operable to receive a signal indicating the mode in which the processor is to operate and to set its method of operation accordingly.

6. A processor according to any one of the preceding claims wherein the processor is operable to produce a keystream including a keystream processor for producing an encryption keystream to encrypt information to be communicated from a first location to a second location, the processor comprising a keystream generator operable to generate a keystream; and a divider operable to divide the keystream into blocks including encryption portions and synchronisation portions; wherein each of the blocks is sub-divided into a plurality of 2ⁿ equally sized sub-blocks per block, where n is an integer equal to 1 or more, and each of the blocks comprises a plurality of separate encryption portions each in a respective one of the sub-blocks and a single synchronisation portion in one of the sub-blocks.

7. A processor according to claim 6 and wherein the divider is operable to produce per block a first sub-block including an encryption portion followed by a discard portion followed by a second sub-block equal in size to the first sub-block and including an encryption portion followed by a synchronisation portion.

8. A processor according to claim 7 and wherein the second sub-block includes an encryption portion followed by a discard portion followed by a synchronisation portion.

9. A processor according to any one of the preceding claims and wherein the keystream blocks each have a length of 512 bits and the sub-blocks each have a length of 256 bits.

10. A processor according to any one of the preceding claims and wherein the encryption portions each have a length of 137 bits.

11. A processor according to any one of the preceding claims and wherein the synchronisation portions each have a length of 64 bits.

12. A processor according to any one of the preceding claims wherein each keystream block is produced in one timeslot of a communications timing sequence in which encrypted information is to be communicated.

13. A processor according to any one of the preceding claims and wherein the keystream generator includes a random number generator operable to produce a random number and a combiner operable to combine the random number with a secret key to generate an initial keystream block.

14. A processor according to claim 9 wherein the divider and the keystream generator are operably coupled so that the synchronisation portion in each keystream block is combined with a secret key to produce the next keystream block.

15. A processor according to claim 13 or claim 14 and wherein the random number generator is operable to produce an initial vector block and the keystream generator is operable to perform multiple combinations of the initial vector block and the secret key to produce the keystream block.

16. A processor according to claim 15 and wherein the intial vector block has a length of 64 bits.

17. An encryption processor including a processor according to any one of the preceding claims and a combiner for combining information to be encrypted with the encryption portions produced from the keystream by the divider.

18. An encryption processor according to claim 17 and which is operable so that two frames of the information to be encrypted are respectively combined with encryption portions once per time slot of a communications timing sequence in which the information when encrypted is to be communicated.

19. An encryption processor according to claim 17 or claim 18 and wherein the information to be encrypted comprises one or more of speech information, text and/or numeric data, picture information and video information.

20. A communications transmitter including an encryption processor according to any one of claims 17 to 19.

21. A communications receiver including an encryption processor according to any one of claims 17 to 19.

22. A telecommunications terminal including the transmitter according to claim 20.

23. A telecommunications terminal according to claim 22 wherein the processor of the encryption processor is detachable from the terminal.

24. A telecommunications terminal according to claim 22 or claim 23 and which is a fixed or mobile wireless communications terminal.

25. A telecommunications terminal according to claim 24 and which operates according to TETRA standard protocols.

## Patentansprüche

1. Prozessor (400) zum Verschlüsseln oder Entschlüsseln von Information, die von einem ersten Ort (701) zu einem zweiten Ort (702) zu übertragen ist, wobei der Prozessor eingerichtet ist, aufeinanderfolgende Verschlüsselungs-Schlüsselstrom-Blöcke (207) zu erzeugen, jeden Schlüsselstrom-Block in einen Verschlüsselungsteil (209) und einen Synchronisierungsteil (211) zu teilen, einen oder mehrere Informationsframes (202, 302) unter Verwendung von jedem der aufeinanderfolgenden Verschlüsselungsteile (209, 219) zu verschlüsseln oder zu entschlüsseln; **dadurch gekennzeichnet, dass** der Prozessor in der Lage ist, in jeder von wenigstens zwei Betriebsarten zu arbeiten, die eine erste Betriebsart umfassen, in welcher der Prozessor in der Lage ist, einen einzelnen Verschlüsselungsteil (209) von jedem gegebenen Schlüsselstrom-Block (207) zu produzieren, und eine zweite Betriebsart, in welcher der Prozessor in der Lage ist, einer Vielzahl von Verschlüsselungsteilen (509, 514) und einen einzelnen Synchronisationsteil (518) aus jedem gegebenen Schlüsselstrom-Block (507) zu produzieren, wodurch wenn der Prozessor in der zweiten Betriebsart arbeitet, er in der Lage ist, sich mit einem in der ersten Betriebsart arbeitenden Prozessor zu synchronisieren.

2. Prozessor gemäß Anspruch 1, wobei der Prozessor in der Lage ist, den aus einem gegebenen Schlüsselstrom-Block (207) herausgeteilten Synchronisationsteil (211) als einen Anfangs-Vektor anzuwenden, um den nächsten Schlüsselstrom-Block (217) zu erzeugen.

3. Prozessor gemäß Anspruch 1 oder Anspruch 2, wobei der Prozessor in der ersten Betriebsart in der Lage ist, jeden Informationsframe in einem Halb-Slot oder jedes Frame-Paar in einem Zeitslot von einer operativen Timing-Sequenz unter Verwendung des einzelnen Verschlüsselungsteils zu verschlüsseln oder zu entschlüsseln, und der Prozessor in der zweiten Betriebsart in der Lage ist, zwei oder mehr Informationsframes in einem Zeitslot der Timing-Sequenz unter Verwendung von jedem der Verschlüsselungsteile für jeden der Frames zu verschlüsseln.

4. Prozessor gemäß Anspruch 1, Anspruch 2 oder Anspruch 3, wobei der Prozessor in der Lage ist, ein die Betriebsart, in der der Prozessor arbeitet, angebendes Signal zu senden und/oder zu empfangen.

5. Prozessor gemäß Anspruch 4, wobei der Prozessor in der Lage ist, ein die Betriebsart, in der der Prozessor arbeiten soll, angebendes Signal zu empfangen und sein Arbeitsverfahren dementsprechend einzustellen.

6. Prozessor gemäß einem der vorhergehenden Ansprüche, wobei der Prozessor in der Lage ist, einen Schlüsselstrom mit einem Schlüsselstrom-Prozessor zu Erzeugen, um einen Verschlüsselungs-Schlüsselstrom zur Verschlüsselung von Information, die von einem ersten Ort zu einem zweiten Ort zu übertragen ist, zu produzieren, wobei der Prozessor einen Schlüsselstrom-Generator umfasst, der in der Lage ist, einen Schlüsselstrom zu erzeugen; und einen Teiler, der in der Lage ist, den Schlüsselstrom in Blöcke mit Verschlüsselungsteilen und Synchronisationsteilen zu teilen; wobei jeder der Blöcke unterteilt ist in eine Mehrzahl von 2ⁿ gleich große Unterblöcke pro Block, wobei n eine ganze Zahl größer oder gleich 1 ist und jeder der Blöcke eine Mehrzahl von separaten Verschlüsselungsteilen umfasst, jeder in einem entsprechenden der Unterblöcke, und einen einzelnen Synchronisationsteil in einem der Unterblöcke.

7. Prozessor gemäß Anspruch 6, wobei der Teiler in der Lage ist, pro Block einen ersten Unterblock mit einem Verschlüsselungsteil, gefolgt von einem Wegwerfteil, gefolgt von einem zweiten Unterblock, der genauso groß wie der erste Unterblock ist und einen Verschlüsselungsteil umfasst, gefolgt von einem Synchronisationsteil zu erzeugen.

8. Prozessor gemäß Anspruch 7, wobei der zweite Unterblock einen Verschlüsselungsteil umfasst, gefolgt von einem Wegwerfteil, gefolgt von einem Synchronisationsteil.

9. Prozessor gemäß einem der vorhergehenden Ansprüche, wobei die Schlüsselstrom-Blöcke jeweils eine Länge von 512 Bit aufweisen und die Unterblöcke jeweils eine Länge von 256 Bit aufweisen.

10. Prozessor gemäß einem der vorhergehenden Ansprüche, wobei die Verschlüsselungsteile jeweils eine Länge von 137 Bit aufweisen.

11. Prozessor gemäß einem der vorhergehenden Ansprüche, wobei die Synchronisationsteile jeweils eine Länge von 64 Bit aufweisen.

12. Prozessor gemäß einem der vorhergehenden Ansprüche, wobei jeder Schlüsselstrom-Block in einem Zeitslot einer Kommunikations-Timing-Sequenz erzeugt wird, in der verschlüsselte Information zu übertragen ist.

13. Prozessor gemäß einem der vorhergehenden Ansprüche, wobei der Schlüsselstrom-Generator umfasst einen Zufallszahlengenerator umfasst, der in der Lage ist, eine Zufallszahl zu erzeugen, und einen Kombinierer, der in der Lage ist, die Zufallszahl mit einem geheimen Schlüssel zu kombinieren, um einen Anfangs-Schlüsselstrom-Block zu erzeugen.

14. Prozessor gemäß Anspruch 9, wobei der Teiler und der Schlüsselstrom-Generator derart funktionsfähig gekoppelt sind, dass der Synchronisationsteil in jedem Schlüsselstrom-Block mit einem geheimen Schlüssel kombiniert wird, um den nächsten Schlüsselstrom-Block zu erzeugen.

15. Prozessor gemäß Anspruch 13 oder Anspruch 14, wobei der Zufallszahlengenerator in der Lage ist, einen Anfangs-Vektor-Block zu erzeugen, und der Schlüsselstrom-Generator in der Lage ist, Mehrfachkombinationen aus dem Anfangs-Vektor-Blocks und dem geheimen Schlüssels auszuführen, um den Schlüsselstrom-Block zu produzieren.

16. Prozessor gemäß Anspruch 15, wobei der Anfangs-Vektor-Block eine Länge von 64 Bit aufweist.

17. Verschlüsselungsprozessor mit einem Prozessor gemäß einem der vorhergehenden Ansprüche und einem Kombinierer zum Kombinieren von zu verschlüsselnder Information mit den Verschlüsselungsteilen, die aus dem Schlüsselstrom durch den Teiler erzeugt wurden.

18. Verschlüsselungsprozessor gemäß Anspruch 17, der so betrieben werden kann, dass zwei zu verschlüsselnde Informationsframes jeweils mit Verschlüsselungsteilen kombiniert werden, einmal pro Zeitslot einer Kommunikations-Timing-Sequenz, in der die Information, wenn sie verschlüsselt ist, zu kommunizieren ist.

19. Verschlüsselungsprozessor gemäß Anspruch 17 oder Anspruch 18, wobei die zu verschlüsselnde Information eine oder mehrere der folgenden Bestandteile umfasst: Sprachinformation, Text- und/oder numerische Daten, Bildinformation und Videoinformation.

20. Kommunikationssender mit einem Verschlüsselungsprozessor gemäß einem der Ansprüche 17 bis 19.

21. Kommunikationsempfänger mit einem Verschlüsselungsprozessor gemäß einem der Ansprüche 17 bis 19.

22. Telekommunikationsendgerät mit dem Sender gemäß Anspruch 20.

23. Telekommunikationsendgerät gemäß Anspruch 22, wobei der Prozessor des Verschlüsselungsprozessors von dem Endgerät trennbar ist.

24. Telekommunikationsendgerät gemäß Anspruch 22 oder Anspruch 23, das ein stationäres oder mobiles drahtloses Kommunikationsendegerät ist.

25. Telekommunikationsendgerät gemäß Anspruch 24, das gemäß den TETRA-Standardprotokollen arbeitet.

## Revendications

1. Processeur (400) pour chiffrer ou déchiffrer des informations à transmettre d'un premier emplacement (701) à un deuxième emplacement (702), le processeur étant prévu pour générer des blocs de séquence de clé de chiffrement consécutifs (207), diviser chaque bloc de séquence de clé en une partie chiffrement (209) et une partie synchronisation (211), chiffrer ou déchiffrer une ou plusieurs trames (202, 302) d'informations au moyen de chacune des parties chiffrement consécutives (209, 219) ; **caractérisé en ce que** le processeur peut fonctionner dans chacun d'au moins deux modes, comprenant un premier mode, dans lequel le processeur est prévu pour produire une unique partie chiffrement (209) à partir de chaque bloc de séquence de clé donné (207), et un deuxième mode, dans lequel le processeur est prévu pour produire une pluralité de parties chiffrement (509, 514) et une unique partie synchronisation (518) à partir de chaque bloc de séquence de clé donné (507), de sorte que lorsque le processeur fonctionne au deuxième mode il peut se synchroniser avec un processeur fonctionnant au premier mode.

2. Processeur selon la revendication 1, dans lequel le processeur est prévu pour utiliser la partie synchronisation (211), divisée à partir d'un bloc de séquence de clé donné (207), en tant que vecteur initial pour produire le bloc de séquence de clé suivant (217).

3. Processeur selon la revendication 1 ou la revendication 2, et dans lequel, au premier mode, le processeur est prévu pour chiffrer ou déchiffrer chaque trame d'information dans une demi-tranche de temps ou chaque paire de trames dans une tranche de temps d'une séquence de synchronisation fonctionnelle, au moyen de l'unique partie chiffrement et, au deuxième mode, le processeur est prévu pour chiffrer deux trames d'information ou plus dans une tranche de temps de la séquence de synchronisation, au moyen de chacune des parties chiffrement pour chacune des trames.

4. Processeur selon la revendication 1, la revendication 2 ou la revendication 3, et dans lequel le processeur est prévu pour envoyer et/ou recevoir un signal indiquant le mode dans lequel fonctionne le processeur.

5. Processeur selon la revendication 4, et dans lequel le processeur est prévu pour recevoir un signal indiquant le mode dans lequel fonctionne le processeur, et pour régler son procédé de fonctionnement en conséquence.

6. Processeur selon l'une quelconque des revendications précédentes, dans lequel le processeur est prévu pour produire une séquence de clé, incluant un processeur de séquence de clé pour produire une séquence de clé de chiffrement pour chiffrer des informations à transmettre d'un premier emplacement à un deuxième emplacement, le processeur comprenant un générateur de séquence de clé prévu pour générer une séquence de clé, et un diviseur prévu pour diviser la séquence de clé en blocs comprenant des parties chiffrement et des parties synchronisation ; où chacun des blocs est subdivisé en une pluralité de 2ⁿ sous-blocs de taille égale par bloc, n étant un entier égal à 1 ou plus, et chacun des blocs comprend une pluralité de parties chiffrement distinctes, chacune dans l'un respectif des sous-blocs, et une unique partie synchronisation dans l'un des sous-blocs.

7. Processeur selon la revendication 6, et dans lequel le diviseur est prévu pour produire, par bloc, un premier sous-bloc incluant une partie chiffrement suivie par une partie à supprimer, suivi par un deuxième sous-bloc de même taille que le premier sous-bloc et incluant une partie chiffrement suivie par une partie synchronisation,

8. Processeur selon la revendication 7, et dans lequel le deuxième sous-bloc comprend une partie chiffrement suivie par une partie à supprimer, suivie par une partie synchronisation.

9. Processeur selon l'une quelconque des revendications précédentes, et dans lequel les blocs de séquence de clé ont chacun une longueur de 512 bits et les sous-blocs ont chacun une longueur de 256 bits.

10. Processeur selon l'une quelconque des revendications précédentes, et dans lequel les parties chiffrement ont chacune une longueur de 137 bits.

11. Processeur selon l'une quelconque des revendications précédentes, et dans lequel les parties synchronisation ont chacune une longueur de 64 bits.

12. Processeur selon l'une quelconque des revendications précédentes, dans lequel chaque bloc de séquence de clé est produit dans une tranche de temps d'une séquence de synchronisation de transmission dans laquelle des informations chiffrées doivent être transmises.

13. Processeur selon l'une quelconque des revendications précédentes, et dans lequel le générateur de séquence de clé comprend un générateur de nombre aléatoire prévu pour produire un nombre aléatoire et un combineur prévu pour combiner le nombre aléatoire à une clé secrète pour générer un bloc de séquence de clé initial.

14. Processeur selon la revendication 9, dans lequel le diviseur et le générateur de séquence de clé sont fonctionnellement couplés l'un à l'autre de façon que la partie synchronisation de chaque bloc de séquence de clé soit combinée à une clé secrète pour produire le bloc de séquence de clé suivant.

15. Processeur selon la revendication 13 ou la revendication 14, et dans lequel le générateur de nombre aléatoire est prévu pour produire un bloc de vecteur initial et le générateur de séquence de clé est prévu pour effectuer plusieurs combinaisons du bloc de vecteur initial et de la clé secrète pour produire le bloc de séquence de clé.

16. Processeur selon la revendication 15, et dans lequel le bloc de vecteur initial a une longueur de 64 bits.

17. Processeur de chiffrement incluant un processeur selon l'une quelconque des revendications précédentes et un combineur pour combiner des informations à chiffrer aux parties chiffrement produites à partir de la séquence de clé par le diviseur.

18. Processeur de chiffrement selon la revendication 17, et qui fonctionne de façon que deux trames des informations à chiffrer soient respectivement combinées à des parties chiffrement, une fois par tranche de temps d'une séquence de synchronisation de transmission dans laquelle les informations doivent être transmises, une fois qu'elles ont été chiffrées.

19. Processeur de chiffrement selon la revendication 17 ou la revendication 18, et dans lequel les informations à chiffrer comprennent une ou plusieurs informations sous forme de paroles, de textes et/ou de données numériques, d'images et de vidéo.

20. Emetteur de communication comprenant un processeur de chiffrement selon l'une quelconque des revendications 17 à 19.

21. Récepteur de communication comprenant un processeur de chiffrement selon l'une quelconque des revendications 17 à 19.

22. Terminal de télécommunication comprenant l'émetteur selon la revendication 20.

23. Terminal de télécommunication selon la revendication 22, dans lequel le processeur du processeur de chiffrement est détachable du terminal.

24. Terminal de télécommunication selon la revendication 22 ou la revendication 23, et qui est un terminal de communication fixe ou un terminal de communication sans fil mobile.

25. Terminal de télécommunication selon la revendication 24, et qui fonctionne selon les protocoles standards TETRA.
